# EUROPÄISCHE PATENTSCHRIFT

(11) **EP 1 422 482 B1**
(45) Veröffentlichungstag und Bekanntmachung des Hinweises auf die Patenterteilung: **08.03.2006**
(21) Anmeldenummer: 02406012.1
(22) Anmeldetag: 22.11.2002
(51) Int. Cl.: F24F 5/00

(54) **Einrichtung zum Heizen und Kühlen eines Raumes, Deckenelement für eine solche Einrichtung sowie Verfahren zu ihrem Betrieb**
Device for heating and cooling a room, ceiling element for this device and method for its operation
Dispositif de chauffage et de refroidissement d'un local, élément de plafond pour ce dispositif et méthode pour sa commande

(43) Veröffentlichungstag der Anmeldung: 26.05.2004
(73) Patentinhaber: Metallwaren AG Heiterschen, Heiterschen, 9545 Wängi (CH)
(72) Erfinder: Roschmann, Klaus, 8730 Uznach (CH)
(74) Vertreter: Sutter, Kurt

(56) Entgegenhaltungen:
- DE-A- 4 403 528
- DE-A- 10 027 287
- US-A- 6 082 126
- US-B1- 6 311 764

## Beschreibung

### Technisches Gebiet

Die Erfindung betrifft eine Einrichtung zum Heizen und Kühlen eines Raumes, ein Deckenelement für eine solche Einrichtung sowie ein Verfahren zu Ihrem Betrieb. Einrichtungen und Deckenelemente der beschriebenen Art dienen vor allem zum Kühlen und Heizen von Arbeits-, insbesondere Büroräumen.

### Stand der Technik

Es sind viele Einrichtungen zum Heizen und Kühlen eines Raumes bekannt. Gewöhnlich wird mit diesen während einer Betriebsphase vor allem unmittelbar der Raum gekühlt und während einer Zwischenphase, meist während der Nacht, die normalerweise aus Beton bestehende Decke des Raumes. Bei den bekannten Einrichtungen erfolgt die thermische Einwirkung auf die Decke vor allem durch Wärmeleitung und ist daher vom schlecht kontrollierbaren und räumlich stark schwankenden wärmeleitenden Kontakt abhängig. Ausserdem ist sie von der Kühlung und Heizung des Raums in keiner Weise trennbar. Da diese jeweils nach den momentanen Bedingungen und Anforderungen erfolgt, hat sie nicht beeinflussbare und meist störende Auswirkungen auf die Temperaturverteilung in der Decke, die dabei auf die Kühlung oder Heizung des Raumes in gewöhnlich unerwünschter Weise zurückwirkt. Wird dagegen die Decke gekühlt, so beeinflusst dies in oft störender Weise die Raumtemperatur.

So wird bei starker Kühlung des Raumes während einer Betriebsphase, insbesondere bei hoher Wärmelast, wie sie vor allem am späteren Nachmittag und Abend auftritt, zwangsläufig auch die Decke stark abgekühlt, was eine sehr hohe Kühlleistung nötig macht. Dies verlangt eine entsprechend grosse Dimensionierung der Einrichtung, wenn der Komfort nicht leiden soll. Wenn umgekehrt in einer Zwischenphase, in der der Raum nicht benutzt wird, gewöhnlich nachts, die Decke stark vorgekühlt wird, wird zwangsläufig auch der Raum stark mitgekühlt, was zu einer Unterkühlung führen und eine Heizphase am Morgen nötig machen kann. Vorübergehendes Heizen führt in jedem Fall zu einer Erwärmung der Decke, die gewöhnlich später durch höhere Kühlleistungen kompensiert werden muss.

DE 44 03 528 A1 offenbart eine mit Abstand unter einer Gebäudedecke angeordnete Kühldecke, welche sowohl auf ihrer dem Raum zugewandten Seite als auf ihrer der Gebäudedecke zugewandten Seite Kühlflächen aufweist, welche separat aktiverbar sind, indem die Raumaustauschfläche und die Deckenaustauschfläche an separate Kreisläufe angeschlossen sind. Der Kühlkreislauf für die Deckenaustauschflächen wird nur dann aktiviert, wenn eine erhöhte Kühlleistung und/oder eine Nachtauskühlung der Decke gewünscht wird.

### Darstellung der Erfindung

Der Erfindung liegt die Aufgabe zu Grunde, eine gattungsgemässe Einrichtung anzugeben, mit welcher bei mässigen Gestehungskosten ein Raum unter Einsatz von Deckenkühlung besonders energiesparend und dadurch kostengünstig gekühlt und eventuell auch geheizt werden kann. Ausserdem soll ein geeignetes Deckenelement für eine derartige Einrichtung angegeben werden sowie ein Verfahren zu ihrem Betrieb, bei welchem ihre günstigen Eigenschaften genutzt werden.

Diese Aufgabe wird durch die Merkmale im Kennzeichen des Anspruchs 1, 4 bzw. 11 gelöst.

Die Erfindung gestattet es, die thermische Einwirkung auf die Decke besser zu kontrollieren und von der Kühlung oder Heizung des Raumes wenigstens teilweise zu entkoppeln. Wenn der Raum gekühlt wird, kann je nach Phase, d.h. nach Tageszeit und Anforderungen, vor allem der Raum oder vor allem die Decke gekühlt werden. Wenn der Raum geheizt wird, kann durch eine geeignete Betriebsweise eine Aufheizung der Decke weitgehend vermieden werden.

### Kurze Beschreibung der Zeichnungen

Im folgenden wird die Erfindung anhand von Figuren, welche lediglich Ausführungsbeispiele darstellen, näher erläutert. Es zeigen
- Fig. 1: eine Draufsicht auf einen Teil eines erfindungsgemässen Deckenelements,
- Fig. 2: einen Schnitt längs II-II in Fig. 1, der auch einen Teil der Decke erfasst,
- Fig. 3: schematisch eine erfindungsgemässe Einrichtung gemäss einer ersten Ausführungsform,
- Fig. 4: schematisch eine erfindungsgemässe Einrichtung gemäss einer zweiten Ausführungsform und
- Fig. 5: schematisch eine erfindungsgemässe Einrichtung gemäss einer dritten Ausführungsform.

### Wege zur Ausführung der Erfindung

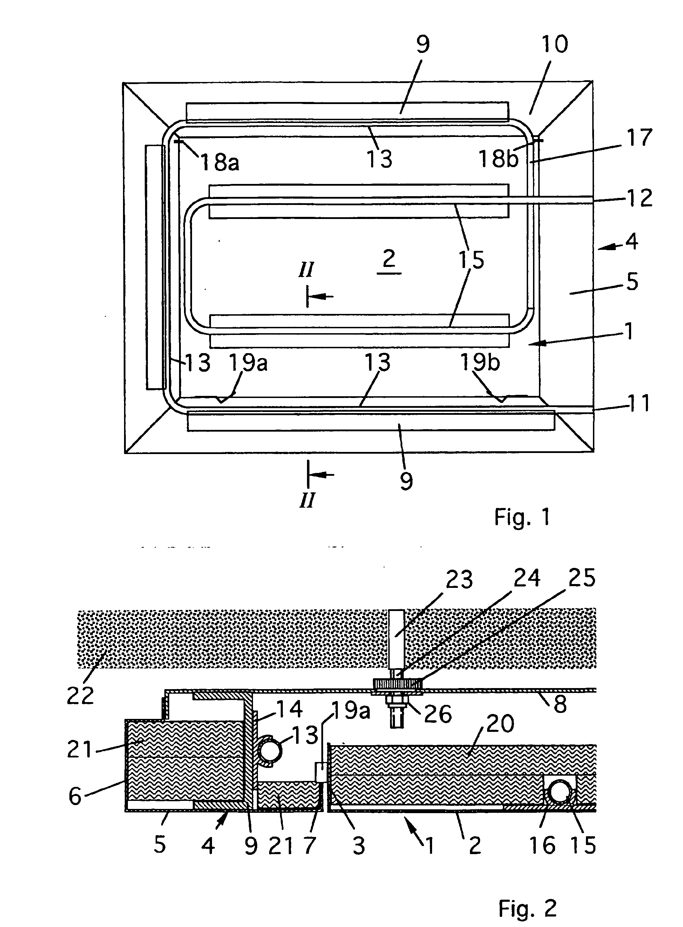

Ein erfindungsgemässes Deckenelement weist eine rechteckige Wanne 1 auf, die von einer waagrechten gelochten Grundplatte 2 und von einer längs ihres Randes umlaufenden senkrechten Seitenwand 3 gebildet wird. Die Wanne 1 wird mit geringem Abstand von einem ebenfalls wannenartig ausgebildeten Rahmen 4 umgeben mit einem gelochten Boden 5, an den aussen eine umlaufende und im oberen Teil etwas einspringende Aussenwand 6 anschliesst und innen eine niedrige Innenwand 7, die der Seitenwand 3 der Wanne 1 gegenüberliegt. Eine zur Grundplatte 2 parallele Deckplatte 8 (in Fig. 1 weggelassen) bedeckt sowohl den Rahmen 4 als auch die Wanne 1. Ein nach unten weisender umlaufender Flansch derselben ist mit einem oberen Randstreifen der Aussenwand 6 vernietet. Der Rahmen 4 ist jeweils mit der Unterseite eines unteren Flansches nach aussen offener U-Profile 9 verklebt, während die Deckplatte 8 jeweils mit der Oberseite eines oberen Flansches derselben ebenfalls verklebt ist.

Eine Leitung 10, welche einen ersten Anschluss 11 mit einem zweiten Anschluss 12 verbindet, zerfällt in einen an den ersten Anschluss 11 anschliessenden im Rahmen 4 umlaufenden ersten Leitungsabschnitt 13, welcher in Kontaktplatten 14 geführt ist, die mit den Innenseiten der U-Profile 9 verklebt sind, so dass er mechanisch und thermisch stark an diese gekoppelt ist und einen an diesen anschliessenden, zum zweiten Anschluss 12 führenden in der Wanne 1 hin- und zurücklaufenden zweiten Leitungsabschnitt 15, der in zwei parallelen mit der Oberseite der Grundplatte 2 verklebten Kontaktplatten 16 geführt ist, so dass er mechanisch und thermisch eng an die Grundplatte 2 gekoppelt ist.

Der erste Leitungsabschnitt 13 ist mit dem zweiten Leitungsabschnitt 15 durch einen Schlauch 17 aus biegsamem Material, z.B. Kunststoff verbunden. Zur Erleichterung von Wartungsarbeiten ist die Wanne 1 um eine durch Scharniere 18a,b definierte ihrem Seitenrand folgende Achse schwenkbar am Rahmen 4 verankert. Zum Abklappen der Wanne 1 nach unten müssen an ihrer Seitenwand 3 befestigte Verriegelungsfedern 19a,b, die über den Rand der Innenwand 7 des Rahmens 4 vorstehen und sie in ihrer Einsatzlage halten, nach innen gedrückt werden.

In der Wanne 1 ist auf einer Lage Akustikpapier eine verhältnismässig dicke Dämpfungsschicht 20 von schallabsorbierendem und thermisch isolierendem Material, z.B. Steinwolle angeordnet, welche neben ihrer schalldämpfenden Wirkung die Grundplatte 1 und den zweiten Leitungsabschnitt 15 von der Deckplatte 8 thermisch isoliert. Desgleichen ist der Rahmen 4 weitgehend von entsprechenden Dämpfungsschichten 21 ausgefüllt (in Fig. 1 weggelassen). In der Mitte der Wanne 1 kann ein Sprinkler angebracht sein.

Das erfindungsgemässe Deckenelement besteht also im wesentlichen aus zwei Teilen, einerseits der Wanne 1 mit der Grundplatte 2, die thermisch eng an den zweiten Leitungsabschnitt 15 gekoppelt ist und andererseits einem Zusatzteil, bestehend aus dem Rahmen 4 und der Deckplatte 8, die mechanisch und thermisch durch die U-Profile 9 eng miteinander und thermisch eng an den ersten Leitungsabschnitt 13 gekoppelt sind. Die beiden Teile, die sonst nur über die Scharniere 18a,b und die Verriegelungsfedern 19a,b verbunden sind, sind im übrigen thermisch voneinander weitgehend entkoppelt.

Das Deckenelement ist unterhalb einer Decke 22, gewöhnlich aus Beton, aufgehängt. Dazu sind mehrere Dübel 23 in Bohrlöcher in der Decke 22 eingelassen und in denselben Schraubenbolzen 24 eingeschraubt, die jeweils eine Rändelscheibe 25 aufweisen und eine Mutter 26 tragen, zwischen denen die Deckplatte 8 geklemmt ist. Die Oberseite der Deckplatte 8 bildet eine Deckenaustauschfläche, über welche vor allem durch Strahlung Wärme mit der Decke 22 ausgetauscht wird. Dieser Austausch hängt nur wenig vom Abstand zwischen der Deckplatte 8 und der Decke 22 ab, so dass Unebenheiten derselben sich auch diesbezüglich nicht ungünstig auswirken. Die Unterseite der Grundplatte 2 dagegen bildet eine etwas kleinere Raumaustauschfläche, über die, wiederum vor allem durch Strahlung und nur in geringem Ausmass durch freie Konvektion, Wärme mit dem unterhalb der Deckenelemente liegenden Raum ausgetauscht wird. Die Unterseite des Bodens 5 bildet eine wesentlich kleinere Zusatzaustauschfläche, über die ebenfalls mit dem Raum überwiegend durch Strahlung Wärme ausgetauscht wird.

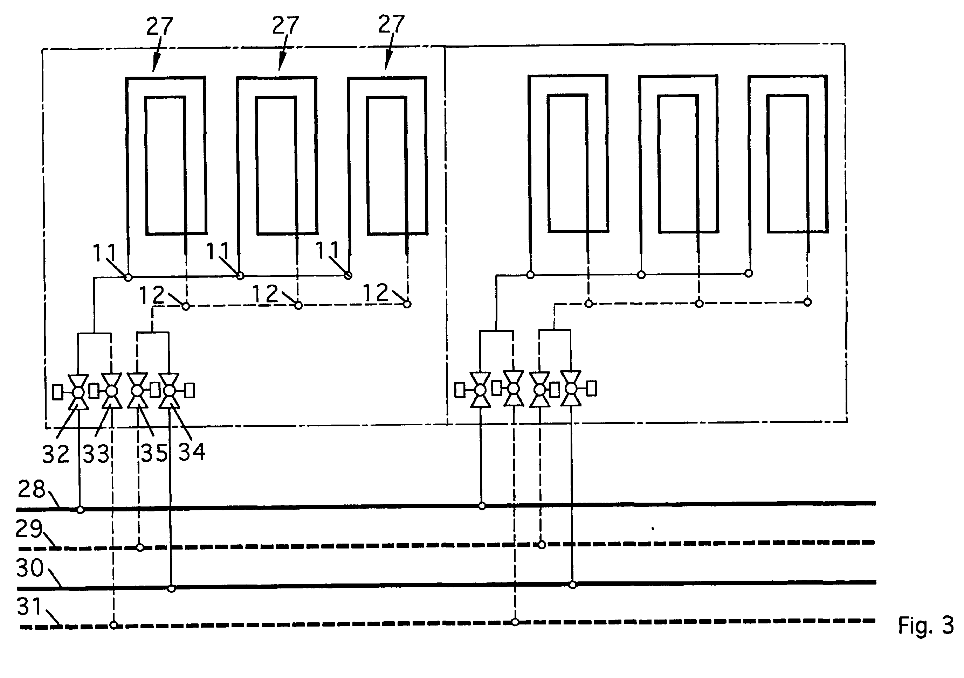

Die erfindungsgemässe Einrichtung zum Kühlen und Heizen eines Raumes umfasst in der Regel mehrere erfindungsgemässe Deckenelemente 27 (Fig. 3). Sie können die Decke 22 lückenlos bedecken und, auch wenn diese grössere Unebenheiten aufweist, mittels der Schraubenbolzen 24 so aufgehängt sein, dass sie bündig und ihre Grundplatten 2 genau waagrecht sind. Dadurch ist eine Zwischendecke unterhalb der Deckenelemente, wie sie sonst meist aus ästhetischen Gründen nötig ist, nicht erforderlich.

Zur Zuführung und Abführung eines Wärmeträgermediums, gewöhnlich Wasser, sind ein Kühlvorlauf 28, ein Kühlrücklauf 29, ein Heizvorlauf 30 und ein Heizrücklauf 31 zwischen der Decke 22 und den Deckenelementen 27 angeordnet. Die ersten Anschlüsse 11 von Gruppen von jeweils drei Deckenelementen 27 sind gemäss der in Fig. 3 dargestellten ersten Ausführungsform über einen Regulierhahn 32 jeweils parallel mit dem Kühlvorlauf 28 und über einen Absperrhahn 33 mit dem Heizrücklauf 31 verbindbar. Die zweiten Anschlüsse 12 sind jeweils über einen Regulierhahn 34 mit dem Heizvorlauf 30 und über einen Absperrhahn 35 mit dem Kühlrücklauf 29 verbindbar.

Mit dieser Einrichtung sind folgende Verfahrensweisen möglich:

Bei Kühlbedarf wird zu Betriebszeiten in erster Linie der Raum gekühlt. Dazu wird der Regulierhahn 32 ganz geöffnet und der Absperrhahn 33, der nur die Stellungen 'auf' und 'zu' hat, geschlossen. Desgleichen wird der Regulierhahn 34 ganz geschlossen und der Absperrhahn 35 geöffnet. Wegen des ganz geöffneten Regulierhahns 32 nimmt die Durchflussrate einen ersten Wert an, der verhältnismässig hoch ist.

Das kalte Wasser aus dem Kühlvorlauf 28 fliesst in jedem der Deckenelemente 27 zuerst durch den ersten Leitungsabschnitt 13, wodurch der Rahmen 4 mit dem Boden 5 und die Deckplatte 8 gekühlt werden. Die Zusatzaustauschfläche an der Unterseite des Bodens 5 trägt dabei zur Raumkühlung bei. Ueber die Deckenaustauschfläche an der Oberseite der Deckplatte 8 wird ausserdem die Decke 22 gekühlt. Doch erwärmt sich das Wasser wegen der grossen Strömungsgeschwindigkeit und entsprechend kleinen Aufenthaltsdauer im ersten Leitungsabschnitt 13 nur wenig, zumal wenn der Beton vorgekühlt ist. Es tritt also mit noch tiefer Temperatur in den zweiten Leitungsabschnitt 15 ein und entfaltet dort eine entsprechend hohe Kühlwirkung. Die Kühlleistung ist daher wesentlich auf den Raum konzentriert. Es ist denkbar, durch Umkehrung der Strömungsrichtung die Kühlung des Raumes noch etwas stärker zu betonen. Dazu müssen allerdings zusätzliche Verbindungen und Hähne vorgesehen sein. Aber auch wie beschrieben wird der Raum über die Raumaustauschfläche an der Unterseite der Grundplatte 2 verhältnismässig stark gekühlt. Die genauen Werte der Durchflussrate und eventuell der Vorlauftemperatur können dabei nach der Aussentemperatur z.B. an einer Fassade eingestellt werden.

Während einer Zwischenphase, in der der Raum nicht benutzt wird, also gewöhnlich während der Nacht, wird der Regulierhahn 32 so umgestellt, dass die Durchflussrate einen zweiten Wert annimmt, der geringer ist als der erste Wert, z.B. die Hälfte davon. Durch diese Umstellung wird die Kühlleistung anders verteilt. Das Wasser nimmt wegen der jetzt in der Regel höheren Betontemperatur bereits im ersten Leitungsabschnitt 13 viel Wärme auf und erwärmt sich dabei auch wegen der langen Aufenthaltsdauer verhältnismässig stark, so dass es im zweiten Leitungsabschnitt 15 nur noch eine geringe Kühlwirkung entfaltet. Dadurch wird in erster Linie über die Deckenaustauschfläche an der Oberseite der Deckplatte 8 die Decke 22 gekühlt, während der Raum direkt nur verhältnismässig wenig gekühlt wird.

Besteht Heizungsbedarf, so wird der Regulierhahn 32 ganz geschlossen und der Absperrhahn 33 geöffnet, desgleichen wird der Regulierhahn 34 je nach erforderlicher Heizleistung ganz oder halb geöffnet und der Absperrhahn 35 geschlossen. Dadurch werden die zweiten Anschlüsse 12 mit dem Heizvorlauf 30 und die ersten Anschlüsse 11 mit dem Heizrücklauf 31 verbunden. Das warme Wasser aus dem Heizvorlauf 30 fliesst daher zuerst durch den zweiten Leitungsabschnitt 15. Die Vorlauftemperatur ist verhältnismässig hoch und die Durchflussrate vorzugsweise niedrig, so dass sich das Wasser bereits im zweiten Leitungsabschnitt 15 ziemlich stark abkühlt und im ersten Leitungsabschnitt 13 nur noch wenig Wärme abgibt. Der über die Raumaustauschfläche an der Unterseite der Grundplatte 2 in den Raum abgestrahlte Anteil der Heizleistung überwiegt daher stark, während die Zusatzaustauschfläche nur wenig beiträgt und die Wärmeabgabe an die Decke 22 über die Deckenaustauschfläche an der Oberseite der Deckplatte 8 ebenfalls gering ist.

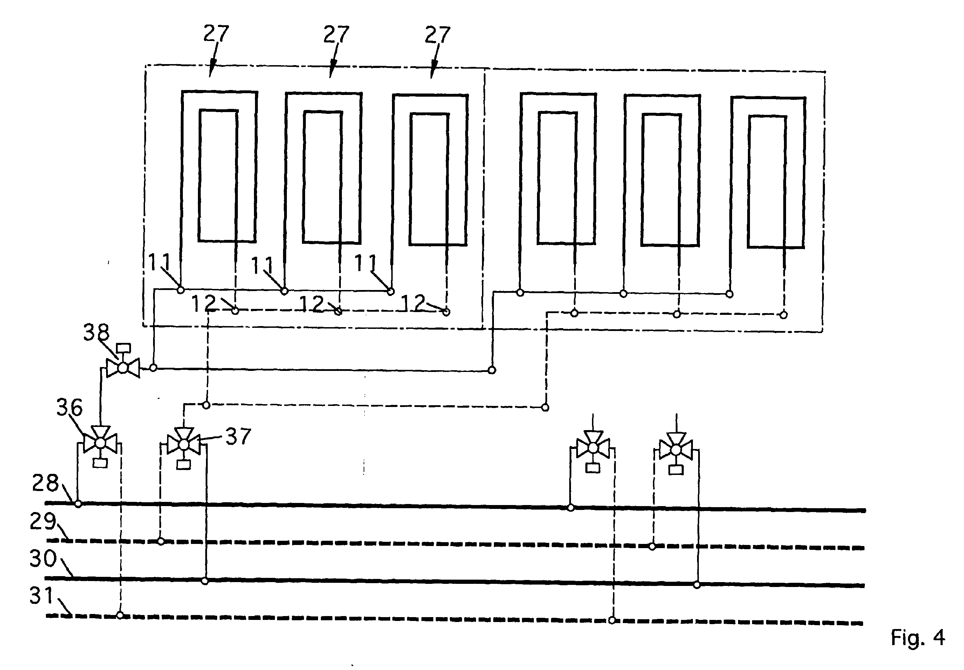

Aus Fig. 4 ist eine zweite Ausführungsform der erfindungsgemässen Einrichtung ersichtlich, die sich jedoch von der ersten nur durch eine abgewandelte, aber funktional äquivalente Verbindung der Deckenelemente 27 mit dem Kühlvorlauf 28, Kühlrücklauf 29, Heizvorlauf 30 und Heizrücklauf 31 unterscheidet. Die ersten Anschlüsse 11 einer Gruppe von Deckenelementen 27 sind jeweils über einen Verteilhahn 36 wahlweise mit dem Kühlvorlauf 28 oder dem Heizrücklauf 31 verbindbar und die zweiten Anschlüsse 12 über einen Verteilhahn 37 mit dem Kühlrücklauf 29 oder dem Heizvorlauf 30. Zwischen dem Verteilhahn 36 und den ersten Anschlüssen 11 liegt ein Regulierhahn 38, mittels dessen die Durchflussrate verringert, z.B. halbiert werden kann. Die Betriebsweisen sind gleich wie bei der ersten Ausführungsform. Zum Kühlen verbindet während einer Betriebsphase der Verteilhahn 36 den Kühlvorlauf 28 über den Regulierhahn 38 mit den ersten Anschlüssen 11 und der Verteilhahn 37 den Kühlrücklauf 29 mit den zweiten Anschlüssen 12. Der Regulierhahn 38 ist halb offen. Während einer Zwischenphase ist er dagegen ganz offen. Falls geheizt werden soll, verbindet der Verteilhahn 37 den Heizvorlauf 30 mit den zweiten Anschlüssen 12 und der Verteilhahn 36 den Heizrücklauf 31 mit den ersten Anschlüssen 11.

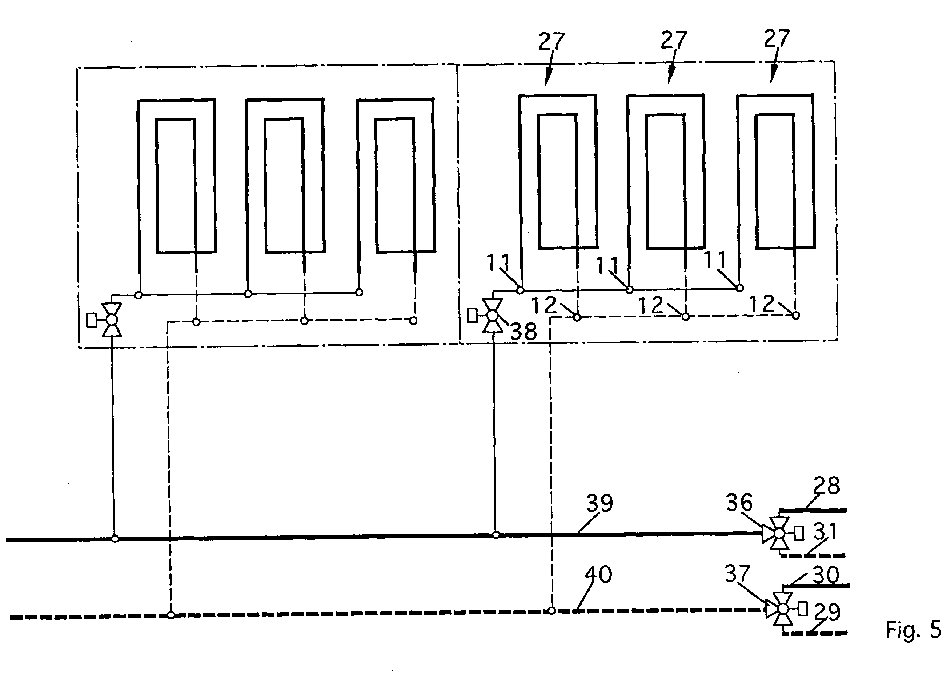

Gemäss einer dritten Ausführungsform (Fig. 5) sind der Verteilhahn 36 und der Verteilhahn 37 den Gruppen von Deckenelementen 27 gemeinsam. Ueber den Verteilhahn 36 ist eine erste Sammelleitung 39, mit welcher die ersten Anschlüsse 11 einer Gruppe jeweils über einen Regulierhahn 38 verbunden sind, wahlweise mit dem Kühlvorlauf 28 oder dem Heizrücklauf 31 verbindbar. In gleicher Weise ist über den Verteilhahn 37 eine fest mit den zweiten Anschlüssen 12 verbundene zweite Sammelleitung 40 wahlweise mit dem Heizvorlauf 30 oder dem Kühlrücklauf 29 verbindbar. Die Betriebsweisen entsprechen den im Zusammenhang mit den vorstehend beschriebenen Ausführungsbeispielen geschilderten.

### Bezugszeichenliste

- 1: Wanne
- 2: Grundplatte
- 3: Seitenwand
- 4: Rahmen
- 5: Boden
- 6: Aussenwand
- 7: Innenwand
- 8: Deckplatte
- 9: U-Profil
- 10: Leitung
- 11: erster Anschluss
- 12: zweiter Anschluss
- 13: erster Leitungsabschnitt
- 14: Kontaktplatte
- 15: zweiter Leitungsabschnitt
- 16: Kontaktplatte
- 17: Schlauch
- 18a,b: Scharniere
- 19a,b: Verriegelungsfedern
- 20: Dämpfungsschicht
- 21: Dämpfungsschicht
- 22: Decke
- 23: Dübel
- 24: Schraubenbolzen
- 25: Rändelscheibe
- 26: Mutter
- 27: Deckenelement
- 28: Kühlvorlauf
- 29: Kühlrücklauf
- 30: Heizvorlauf
- 31: Heizrücklauf
- 32: Regulierhahn
- 33: Absperrhahn
- 34: Regulierhahn
- 35: Absperrhahn
- 36: Verteilhahn
- 37: Verteilhahn
- 38: Regulierhahn
- 39: erste Sammelleitung
- 40: zweite Sammelleitung

## Patentansprüche

1. Einrichtung zum Kühlen und Heizen eines Raumes, mit mindestens einem Kühlvorlauf (28) und einem Kühlrücklauf (29) sowie mit denselben verbindbaren Leitungen (10), wobei die Einrichtung gegen eine Decke (22) des Raumes gerichtete und von ihr beabstandete Deckenaustauschflächen zum Wärmeaustausch mit der Decke (22) durch Strahlung aufweist, welche mit den Leitungen (10) in thermischem Kontakt stehen und ausserdem zum Raum gerichtete Raumaustauschflächen zum Wärmeaustausch mit dem Raum aufweist, welche ebenfalls mit den Leitungen (10) in thermischem Kontakt stehen, während sie im übrigen von den Deckenaustauschflächen thermisch weitgehend entkoppelt sind, **dadurch gekennzeichnet, dass** die Einrichtung mehrere über die Decke (22) verteilte Deckenelemente (27) umfasst, welche jeweils eine Raumaustauschfläche und eine Deckenaustauschfläche aufweisen, mit parallel zwischen den Kühlvorlauf (28) und den Kühlrücklauf (29) schaltbaren Leitungen (10), jeweils mit einem ersten Anschluss (11), auf den ein erster Leitungsabschnitt (13) folgt, welcher mit der Deckenaustauschfläche in thermischem Kontakt steht und einem zweiten Anschluss (12), dem ein auf den ersten Leitungsabschnitt (13) folgender zweiter Leitungsabschnitt (15) voraufgeht, welcher mit der Raumaustauschfläche in thermischem Kontakt steht.

2. Einrichtung nach Anspruch 1, **dadurch gekennzeichnet, dass** die Durchflussrate durch die Leitungen (10) einstellbar ist.

3. Einrichtung nach Anspruch 1 oder 2, **dadurch gekennzeichnet, dass** sie einen Heizvorlauf (30) und einen Heizrücklauf (31) umfasst und dass wahlweise jeweils der erste Anschluss (11) mit dem Kühlvorlauf (28) oder Kühlrücklauf (29) oder mit dem Heizrücklauf (31) und der zweite Anschluss (12) mit dem Kühlrücklauf (29) bzw. Kühlvorlauf (28) bzw. mit dem Heizvorlauf (30) verbindbar ist.

4. Deckenelement für eine Einrichtung nach einem der Ansprüche 1 bis 3, mit einer einen ersten Anschluss (11) mit einem zweiten Anschluss (12) verbindenden Leitung (10), welche einen auf den ersten Anschluss (11) folgenden ersten Leitungsabschnitt (13) und einen auf diesen folgenden, dem zweiten Anschluss (12) voraufgehenden zweiten Leitungsabschnitt (15) aufweist sowie mit einer ungefähr waagrechten Grundplatte (2), deren Unterseite eine gegen den Raum weisende Raumaustauschfläche bildet und mit dem zweiten Leitungsabschnitt (15) in thermischem Kontakt steht, **dadurch gekennzeichnet, dass** das Deckenelement ein Zusatzteil mit einer nach oben gerichteten Deckenaustauschfläche aufweist, welches mit dem ersten Leitungsabschnitt (13) in thermischem Kontakt steht, während es im übrigen von der Grundplatte (2) thermisch weitgehend entkoppelt ist.

5. Deckenelement nach Anspruch 4, **dadurch gekennzeichnet, dass** das Zusatzteil eine zur Grundplatte (2) mindestens annähernd parallele Deckplatte (8) umfasst, deren Oberseite eine gegen die Decke (22) gerichtete Deckenaustauschfläche bildet.

6. Deckenelement nach Anspruch 4 oder 5, **dadurch gekennzeichnet, dass** das Zusatzteil einen die Grundplatte (2) umgebenden Rahmen (4) umfasst.

7. Deckenelement nach Anspruch 6, **dadurch gekennzeichnet, dass** ein Boden (5) des Rahmens (4) eine gegen den Raum weisende Zusatzaustauschfläche bildet, welche kleiner ist als die Raumaustauschfläche.

8. Deckenelement nach Anspruch 7, **dadurch gekennzeichnet, dass** das Zusatzteil mindestens ein U-Profil (9) umfasst, an dessen Innenseite der erste Leitungsabschnitt (13) geführt ist, mit einem oberen Flansch, an dessen Oberseite die Deckplatte (8) anliegt und einem unteren Flansch, an dessen Unterseite der Boden (5) anliegt.

9. Deckenelement nach einem der Ansprüche 4 bis 8, **dadurch gekennzeichnet, dass** der zweite Leitungsabschnitt (15) an der Oberseite der Grundplatte (2) geführt ist und dass die Grundplatte (2) und der zweite Leitungsabschnitt (15) von einer Dämpfungsschicht (20) bedeckt sind.

10. Deckenelement nach einem der Ansprüche 6 bis 9, **dadurch gekennzeichnet, dass** die Grundplatte (2) schwenkbar im Rahmen (4) gelagert ist.

11. Verfahren zum Betrieb einer Einrichtung nach Anspruch 2 oder 3, **dadurch gekennzeichnet, dass** bei Kühlungsbedarf Betriebsphasen und Zwischenphasen auftreten, wobei
- während einer Betriebsphase die ersten Anschlüsse (11) der Deckenelemente (27) jeweils mit dem Kühlrücklauf (29) oder Kühlvorlauf (28) und die zweiten Anschlüsse (12) mit dem Kühlvorlauf (28) bzw. Kühlrücklauf (29) verbunden sind und die Leitungen (10) gemäss einer ersten Durchflussrate vom Wärmeträgermedium durchflossen werden und
- während einer Zwischenphase die ersten Anschlüsse (11) der Deckenelemente (27) jeweils mit dem Kühlrücklauf (29) und die zweiten Anschlüsse (12) mit dem Kühlvorlauf (28) verbunden sind und die Leitungen (10) gemäss einer zweiten Durchflussrate, welche niedriger ist als die erste Durchflussrate, vom Wärmeträgermedium durchflossen werden.

12. Verfahren nach Anspruch 11, **dadurch gekennzeichnet, dass** bei Heizungsbedarf die ersten Anschlüsse (11) der Deckenelemente mit dem Heizrücklauf (31) und die zweiten Anschlüsse (12) mit dem Heizvorlauf (30) verbunden sind.

## Claims

1. Equipment for cooling and heating a room, with at least one cooling feed conduit (28) and one cooling return conduit (29) and conduits (10), which can be connected to these, the equipment having ceiling exchange surfaces, which are directed towards a ceiling (22) of the room and are arranged at a distance therefrom, for heat exchange with the ceiling (22) through radiation, which surfaces are in thermal contact with the conduits (10), and also having room exchange surfaces, directed towards the room, for heat exchange with the room, which surfaces are also in thermal contact with the conduits (10), whereas furthermore they are largely thermally decoupled from the ceiling exchange surfaces, **characterised in that** the equipment comprises a plurality of ceiling elements (27) which are distributed over the ceiling (22), which in each case have a room exchange surface and a ceiling exchange surface, with conduits (10) which can be connected in parallel between the cooling feed conduit (28) and the cooling return conduit (29), in each case with a first connection (11), which is followed by a first conduit section (13) in thermal contact with the ceiling exchange surface, and a second connection (12), which is preceded by a second conduit section (15) which is following the first conduit section (13) and is in thermal contact with the room exchange surface.

2. Equipment according to Claim 1, **characterised in that** the flow rate through the conduits (10) can be adjusted.

3. Equipment according to Claim 1 or 2, **characterised in that** it comprises a heating feed conduit (30) and a heating return conduit (31), and that in each case the first connection (11) can alternatively be connected to the cooling feed conduit (28) or to the cooling return conduit (29) or to the heating return conduit (31), and the second connection (12) can alternatively be connected to the cooling return conduit (29) or to the cooling feed conduit (28) or to the heating feed conduit (30), respectively.

4. Ceiling element for an equipment according to any one of Claims 1 to 3, with a conduit (10) which connects a first connection (11) with a second connection (12) and which has a first conduit section (13) following the first connection (11) and a second conduit section (15) following the first conduit section and preceding the second connection (12), and with an approximately horizontal base plate (2), the bottom side of which forms a room exchange surface directed towards the room and is in thermal contact with the second conduit section (15), **characterised in that** the ceiling element has an additional part which comprises an upward directed ceiling exchange surface and is in thermal contact with the first conduit section (13), whereas it is furthermore largely thermally decoupled from the base plate (2).

5. Ceiling element according to Claim 4, **characterised in that** the additional part comprises a cover plate (8), which is at least approximately parallel to the base plate (2) and the top side of which forms a ceiling exchange surface which is directed towards the ceiling (22).

6. Ceiling element according to Claim 4 or 5, **characterised in that** the additional part comprises a frame (4), which surrounds the base plate (2).

7. Ceiling element according to Claim 6, **characterised in that** a bottom (5) of the frame (4) forms an additional exchange surface which is directed towards the room and which is smaller than the room exchange surface.

8. Ceiling element according to Claim 7, **characterised in that** the additional part comprises at least one U-profile (9), at the inside of which the first conduit section (13) is guided, with an upper flange, against the top side of which the cover plate (8) abuts, and with a lower flange, against the bottom side of which the bottom (5) abuts.

9. Ceiling element according to any one of Claims 4 to 8, **characterised in that** the second conduit section (15) is guided at the top side of the base plate (2), and that the base plate (2) and the second conduit section (15) are covered by a damping layer (20).

10. Ceiling element according to any one of Claims 6 to 9, **characterised in that** the base plate (2) is pivotably mounted in the frame (4).

11. Method for operating an equipment according to Claim 2 or 3, **characterised in that** operating phases and intermediate phases occur when there is a cooling requirement, wherein
- during an operating phase, the first connections (11) of the ceiling elements (27) are in each case connected to the cooling return conduit (29) or cooling feed conduit (28) and the second connections (12) are connected to the cooling feed conduit (28) or cooling return conduit (29), respectively, and heat transfer medium flows through the conduits (10) according to a first flow rate and
- during an intermediate phase, the first connections (11) of the ceiling elements (27) are in each case connected to the cooling return conduit (29) and the second connections (12) are connected to the cooling feed conduit (28), and heat transfer medium flows through the conduits (10) according to a second flow rate, which is lower than the first flow rate.

12. Method according to Claim 11, **characterised in that** when there is a heating requirement, the first connections (11) of the ceiling elements are connected to the heating return conduit (31) and the second connections (12) are connected to the heating feed conduit (30).

## Revendications

1. Installation pour refroidir ou pour chauffer une pièce, comportant au moins une arrivée de refroidissement (28) et un retour de refroidissement (29) ainsi que des conduites (10) qu'on peut leur raccorder, l'installation étant munie de surfaces d'échange de plafond orientées vers un plafond (22) de la pièce, placées à distance de lui, destinées à échanger par rayonnement de la chaleur avec le plafond (22), mises en contact thermique avec les conduites (10), et étant en outre munie de surfaces d'échange de pièce orientées vers la pièce, destinées à échanger la chaleur avec la pièce et également mises en contact thermique avec les conduites (10) tandis qu'elles sont par ailleurs en grande partie thermiquement découplées des surfaces d'échange de plafond,
**caractérisée en ce que** l'installation comprend plusieurs éléments de plafond (27) répartis sur le plafond (22) et dont chacun a une surface d'échange de pièce et une surface d'échange de plafond comportant des conduites (10) parallèles qui peuvent être commutées entre l'arrivée de refroidissement (28) et le retour de refroidissement (29) respectivement par un premier raccord (11), placé en amont d'un premier segment de conduite (13), qui est en contact thermique avec la surface d'échange de plafond et par un deuxième raccord (12), précédé par un deuxième segment de conduite (15) à la suite du premier segment de conduite (13), qui est en contact thermique avec la surface d'échange de pièce.

2. Installation selon la revendication 1, **caractérisée en ce qu'**il est possible de régler le débit dans les conduites (10).

3. Installation selon la revendication 1 ou 2, **caractérisée en ce qu'**elle comprend une arrivée de chauffage (30) et un retour de chauffage (31) et qu'à chaque fois le premier raccord (31) peut être relié au choix à l'arrivée de refroidissement (28) ou au retour de refroidissement (29) ou au retour de chauffage (31) et le deuxième raccord (12) au retour de refroidissement (29) ou à l'arrivée de refroidissement (28) ou à l'arrivée de chauffage (30).

4. Élément de plafond pour une installation selon l'une des revendications 1 à 3, comportant une conduite (10) qui relie un premier raccord (11) à un deuxième raccord (12) et qui comporte un premier segment de conduite (13) à la suite du premier raccord (11) et un deuxième segment de conduite (15) en amont du deuxième raccord (12), comportant en outre une plaque de base (2) approximativement horizontale dont le côté inférieur forme une surface d'échange de pièce, orientée vers la pièce et en contact thermique avec le deuxième segment de conduite (15),
**caractérisé en ce que** l'élément de plafond a une partie supplémentaire comportant une surface d'échange de plafond orientée vers le haut et mise en contact thermique avec le premier segment de conduite (13) tandis que par ailleurs il est en grande partie découplé thermiquement de la plaque de base (2).

5. Élément de plafond selon la revendication 4, **caractérisé en ce que** la partie supplémentaire comprend une plaque de recouvrement (8) au moins presque parallèle à la plaque de base (2) et dont le côté supérieur forme une surface d'échange de plafond orientée vers le plafond (22).

6. Élément de plafond selon la revendication 4 ou 5, **caractérisé en ce que** la partie supplémentaire comprend un cadre (4) qui entoure la plaque de base (2).

7. Élément de plafond selon la revendication 6, **caractérisé en ce qu'**un fond (5) du cadre (4) forme une surface d'échange supplémentaire orientée vers la pièce et plus petite que la surface d'échange de pièce.

8. Élément de plafond selon la revendication 7, **caractérisé en ce que** la partie supplémentaire comprend au moins un profilé en U (9) sur le côté intérieur duquel est guidé le premier segment de conduite (13) et muni d'une collerette supérieure dont le côté supérieur touche la plaque de recouvrement (8) et d'une collerette inférieure dont le côté inférieur touche le fond (5).

9. Élément de plafond selon l'une des revendications 4 à 8, **caractérisé en ce que** le deuxième segment de conduite (15) est guidé sur le côté supérieur de la plaque de base (2) et que la plaque de base (2) et le deuxième segment de conduite (15) sont recouverts par une couche d'isolation (20).

10. Élément de plafond selon l'une des revendications 6 à 9, **caractérisé en ce que** la plaque de base (2) est montée dans le cadre (4) de manière à pivoter.

11. Procédé pour faire fonctionner une installation d'après la revendication 2 ou 3, **caractérisé en ce que**, quand on a besoin de refroidir, il y a des phases de fonctionnement et des phases intermédiaires,
- pendant une phase de fonctionnement chacun des premiers raccords (11) des éléments de plafond (27) est relié au retour de refroidissement (29) ou à l'arrivée de refroidissement (28) et chacun des deuxièmes raccords (12) à l'arrivée de refroidissement (28) ou au retour de refroidissement (29) et il passe dans les conduites (10) un premier débit de l'agent caloporteur et
- pendant une phase intermédiaire chacun des premiers raccords (11) des éléments de plafond (27) est relié au retour de refroidissement (29) et chacun des deuxièmes raccords (12) à l'arrivée de refroidissement (28) et il passe dans les conduites (10), un deuxième débit, inférieur au premier débit, de l'agent caloporteur.

12. Procédé selon la revendication 11, **caractérisé en ce que**, quand on a besoin de chauffer, les premiers raccords (11) des éléments de plafond sont reliés au retour de chauffage (31) et les deuxièmes raccords (12) à l'arrivée de chauffage (30).
